# EUROPEAN PATENT APPLICATION

(11) **EP 4 550 482 A1**
(43) Date of publication of application: **07.05.2025**
(21) Application number: 24205980.6
(22) Date of filing: 10.10.2024
(51) Int. Cl.: H01M 4/92, C25B 11/031, C25B 11/091, C25B 11/093, C25B 11/097, C22C 5/00

(54) **CATALYST ELECTRODE, METHOD FOR MANUFACTURING CATALYST ELECTRODE AND MEMBRANE ELECTRODE ASSEMBLY**

(30) Priority: 13.10.2023 KR 20230136656
(71) Applicant: SK Innovation Co., Ltd., Seoul 03188 (KR)
(72) Inventor: LIM, Yun Ji, Daejeon 34124 (KR); HAN, Hyun Su, Daejeon 34124 (KR); LEE, Tae Kyoung, Daejeon 34124 (KR); KIM, Soo Bean, Daejeon 34124 (KR); SEOK, Tae Hong, Daejeon 34124 (KR)
(74) Representative: Prüfer & Partner mbB Patentanwälte · Rechtsanwälte

(57) **Abstract**

A catalyst electrode according to an embodiment of the present disclosure comprises a metal layer; and a catalyst layer formed on the metal layer, wherein the catalyst layer comprises silver and iridium.

## Description

### BACKGROUND OF THE INVENTION

### 1. Field

The present disclosure relate to a catalyst electrode, a method for manufacturing the catalyst electrode, and a membrane electrode assembly.

### 2. Description of the Related Art

Hydrogen energy is clean energy and is attracting attention as one of the promising forms of alternative energy to solve energy problems in the long term. Among hydrogen production methods, the water electrolysis method, which uses electrical energy to separate water into hydrogen and oxygen and which does not emit carbon dioxide, is receiving much attention because it is eco-friendly, and is expected to greatly contribute to the achievement of carbon neutrality.

Meanwhile, water electrolysis reactions comprise the oxygen evolution reaction (OER) and the hydrogen evolution reaction (HER), wherein the OER occurs at the oxygen evolution electrode and the HER occurs at the hydrogen evolution electrode. The OER and the HER are shown in Formula 1 below.

[Formula 1] Oxygen evolution reaction : 2H₂O → 4H⁺ +O₂ +4e⁻Hydrogen evolution reaction : 4H⁺ + 4e⁻ → 2H₂ Overall reaction: 2H₂O → 2H₂ + O₂

In particular, in the water electrolysis reaction, an overpotential higher than the theoretical OER voltage occurs due to a slower reaction rate of the OER than that of the HER. Thus, in order to improve the performance of a water electrolysis system, it is necessary to develop a high-efficiency catalyst lowering the overpotential of the OER which requires a high overpotential.

### SUMMARY OF THE INVENTION

Embodiments of the present disclosure may provide a catalyst electrode with improved OER performance, a method for manufacturing the catalyst electrode, and a membrane electrode assembly.

A catalyst electrode according to an embodiment of the present disclosure comprises a metal layer; and a catalyst layer formed on the metal layer, wherein the catalyst layer comprises silver and iridium.

In one embodiment, the catalyst electrode contains iridium in the catalyst layer at a loading amount ranging from 0.02 mg/cm² to 0.8 mg/cm².

In one embodiment, at least a part of the silver and iridium comprised in the catalyst layer may be chemically bonded with each other.

In one embodiment, the metal layer may comprise one or more selected from the group consisting of a metal mesh, metal foam, metal foil, metal felt, and metal fiber.

In one embodiment, the metal layer may comprise one or more metal or metal alloy selected from the group consisting of titanium, nickel, and stainless steel.

In one embodiment, the catalyst layer may comprise: a first layer comprising the silver and in contact with the metal layer; and a second layer comprising the iridium and formed on the first layer.

In one embodiment, at least a part of the silver comprised in the first layer is chemically bonded with a metal of the metal layer.

In one embodiment, the catalyst layer may not comprise a binder.

A method for manufacturing a catalyst electrode according to an embodiment of the present disclosure comprises a step of coating a metal substrate with silver and iridium.

In one embodiment, the step of coating a metal substrate with silver and iridium may comprise: a step of forming a first layer comprising silver on the metal substrate by inputting the metal substrate to a silver precursor solution comprising a silver ion; and a step of forming a second layer comprising iridium on the first layer by inputting the metal substrate on which the first layer is formed to an iridium precursor solution comprising an iridium ion.

In one embodiment, the step of forming a first layer may comprise a step of heat-treating the substrate coated with the first layer.

In one embodiment, the step of heat-treating the substrate coated with the first layer is carried out at a temperature of 100 °C to 900 °C for 10 minutes to 10 hours.

In one embodiment, the step of forming a second layer may comprise a step of heat-treating the substrate coated with the second layer.

In one embodiment, the step of heat-treating the substrate coated with the second layer is carried out at a temperature of 100 °C to 900 °C for 10 minutes to 10 hours.

In one embodiment, the method for manufacturing a catalyst electrode may further comprise a step of acid-treating the metal substrate before the step of coating a metal substrate with silver and iridium.

In one embodiment, the silver precursor solution contains a silver precursor of one or more selected from the group consisting of silver nitrate, silver acetate, silver sulfate, silver perchlorate, silver acetylacetonate, and silver methanesulfonate; and/or the iridium precursor solution contains an iridium precursor of one or more selected from the group consisting of iridium chloride, an iridium chloride hydrate, iridium bromide, iridium acetylacetonate, hexachloroiridic acid, sodium hexachloroiridate, and potassium hexachloroiridate, preferably iridium chloride hydrate.

A membrane electrode assembly according to an embodiment of the present disclosure comprises: an electrolyte membrane; an anode positioned on one surface of the electrolyte membrane; and a cathode positioned on the other surface of the electrolyte membrane, wherein the anode comprises: a metal layer; and a catalyst layer formed on the metal layer and comprising silver and iridium.

The present disclosure further provides a use of the catalyst electrode for being comprised in a water electrolysis device or in a fuel cell.

According to the present disclosure, a catalyst electrode with improved OER performance, a method for manufacturing the catalyst electrode, and a membrane electrode assembly can be provided.

### BRIEF DESCRIPTION OF THE DRAWINGS

FIG. 1 shows a diagram for explaining a catalyst electrode according to one embodiment of the present disclosure.
FIG. 2 shows a flowchart for explaining a method for manufacturing a catalyst electrode according to one embodiment of the present disclosure.
FIG. 3 shows a diagram for explaining step S110 of FIG. 2 in more detail.
FIG. 4 shows a diagram for explaining step S120 of FIG. 2 in more detail.
FIG. 5 shows a diagram for explaining a catalyst electrode manufactured by the method for manufacturing a catalyst electrode according to FIG. 2.
FIG. 6 shows energy dispersive spectrometer (EDS) mapping images of a catalyst electrode according to one embodiment of the present disclosure.
FIG. 7 is a graph showing the results of an X-ray diffraction (XRD) analysis of catalyst electrodes according to one embodiment of the present disclosure and comparative examples.
FIG. 8 is a graph showing the results of an X-ray photoelectron spectroscopy (XPS) analysis of catalyst electrodes according to one embodiment of the present disclosure and comparative examples.
FIG. 9 is a graph showing the embedded amount of iridium metal as measured by performing an inductively coupled plasma atomic emission spectroscopy (ICP-AES) analysis with catalyst electrodes according to one embodiment of the present disclosure and comparative examples.
FIG. 10 is a graph showing OER performance of catalyst electrodes according to one embodiment of the present disclosure and comparative examples.

### DETAILED DESCRIPTION

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification of application. In addition, the technical principle of the present invention is not construed as being limited to the embodiments described in the present specification or application.

Hereinafter, the present invention will be described in detail with reference to the accompanying drawing. However, those skilled in the art will appreciate that such embodiments described with reference to the accompanying drawing are provided to further understand the spirit of the present invention and do not limit subject matters to be protected as disclosed in the detailed description and appended claims.

Furthermore, throughout the disclosure, unless otherwise particularly stated, the word "comprise", "comprise", "contain", or "have" does not mean the exclusion of any other constituent element, but means further inclusion of other constituent elements, and elements, materials, or processes which are not further listed are not excluded.

Unless the context clearly indicates otherwise, the singular forms of the terms used in the present specification may be interpreted as comprising the plural forms. As used herein, the singular form of "a", "an", and "the" comprise plural referents unless the context clearly states otherwise.

The numerical range used in the present disclosure comprises all values within the range comprising the lower limit and the upper limit, increments logically derived in a form and spanning in a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present disclosure. Unless otherwise defined in the present disclosure, values which may be outside a numerical range due to experimental error or rounding off of a value are also comprised in the defined numerical range.

For the purposes of this disclosure, unless otherwise indicated, all numbers expressing quantities of ingredients, reaction conditions, dimensions, physical characteristics, and so forth used in the disclosure are to be understood as being modified in all instances by the term "about." Hereinafter, unless otherwise particularly defined in the present disclosure, "about" may be considered as a value within 30%, 25%, 20%, 15%, 10%, 5%, 3%, 2%, 1%, 0.5%, 0.1%, 0.05% or 0.01% of a stated value. Unless indicated to the contrary, the numerical parameters set forth in this disclosure are approximations that can vary depending upon the desired properties sought to be obtained by the present invention.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

### Catalysis electrode

In one aspect of the present disclosure, provided is a catalyst electrode comprising a metal layer; and a catalyst layer formed on the metal layer, wherein the catalyst layer comprises sliver and iridium.

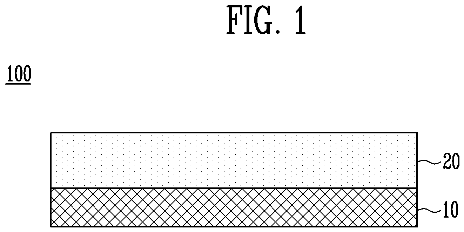

FIG. 1 shows a diagram for explaining a catalyst electrode according to one embodiment of the present disclosure. Hereinafter, a catalyst electrode according to an embodiment of the present disclosure will be described with reference to FIG. 1.

Referring to FIG. 1, a catalyst electrode 100 comprises a metal layer 10 and a catalyst layer 20.

The metal layer 10 may function as a metal substrate on which a catalyst metal is deposited, and in one embodiment, the metal of the metal layer 10 may comprise one or more selected from the group consisting of a metal mesh, metal foam, metal foil, metal felt, and metal fiber, which respectively is made of an appropriate metal or metal alloy. In addition, in one embodiment, the metal of the metal layer 10 may comprise one or more metal or metal alloy selected from the group consisting of titanium, nickel, and stainless steel. For example, the metal layer may comprise a titanium mesh, but is not limited thereto.

A catalyst layer 20 is formed on a metal layer 10 and comprises silver and iridium. The catalyst layer 20 may comprise silver and iridium in one layer, or the catalyst layer 20 may comprise silver and iridium in separate layers, respectively, as further described later. In an embodiment, a metal layer 10 may be first coated with silver and then coated with iridium. In one embodiment, a catalyst layer 20 may comprise a first layer comprising silver and being in contact with a metal layer 10; and a second layer comprising iridium and formed on the first layer. In one embodiment, at least a part of silver comprised in a first layer may be chemically boded to the metal of the metal layer, and accordingly, electron transfer performance and durability of a catalyst electrode 100 may be improved. The chemical bond between the silver and the metal of the metal layer may be a metallic bond.

In an embodiment, at least a part of the silver and iridium comprised in a catalyst layer 20 may be chemically bonded to each other. The chemical bond between the silver and the iridium may be a metallic bond. In other words, as at least a part of the silver and iridium comprised in a catalyst layer 20 is chemically bonded to each other, the electronic structure of at least a part of the silver and iridium comprised in the catalyst layer 20 may be changed. As the electronic structure of at least a part of the silver and iridium comprised in the catalyst layer 20 is changed, in particular, as the electronic structure of at least a part of the iridium comprised in the catalyst layer 20 is changed, the activity of the catalyst electrode 100 for oxygen evolution reaction (OER) may be improved, and as a result, the OER performance of the catalyst electrode 100 may be improved.

In an embodiment, the catalyst layer 20 may not comprise a binder. The metal layer 10 may be directly coated with silver and iridium, and a chemical bond may be formed between the metal layer 10 and the catalyst layer 20, so the catalyst layer 20 may be formed on the metal layer 10 even without using a separate binder.

The commonly used Nafion binder is a PFAS(Per- and polyfluoroalkyl substances), which can cause environmental issues, and there is a ploblem of reduced activity and reduced durability due to degradation of the Nafion binder during the electrode reaction. Also, the catalyst layer 20 can be directly deposited on the current collector(metal layer 10) without the use of a binder, which increases the chemical bonding between the current collector(metal layer 10) and the catalyst layer 20, thereby improving electron-transferability and durability.

The catalyst electrode 100 according to an embodiment of the present disclosure may have oxygen evolution performance equal to or even better than that of a conventional noble metal catalyst electrode, with only a small metal loading amount compared to a conventionally used noble metal catalyst electrode.

A catalyst electrode 100 according to an embodiment of the present disclosure may be comprised in a water electrolysis device or may be comprised in a fuel cell, but the use of a catalyst electrode 100 is not limited thereto.

### Method for manufacturing catalyst electrode

In another aspect of the present disclosure, provided is a method for manufacturing a catalyst electrode, comprising a step of coating a metal substrate with silver and iridium.

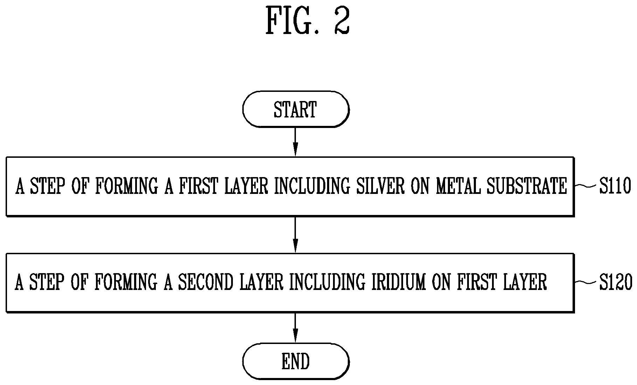

FIG. 2 shows a flowchart for explaining a method for manufacturing a catalyst electrode according to one embodiment of the present disclosure. Hereinafter, a method for manufacturing a catalyst electrode according to an embodiment of the present disclosure will be described with reference to FIG. 2.

A method for manufacturing a catalyst electrode according to an embodiment of the present disclosure comprises a step of coating a metal substrate with silver and iridium. In addition, a method for manufacturing a catalyst electrode according to an embodiment of the present disclosure may further comprise a step of acid-treating a metal substrate before the step of coating a metal substrate with silver and iridium. A metal substrate may be a feature that is identical to the above-described metal layer, and accordingly, in an embodiment, a metal layer 10 may comprise one or more selected from the group consisting of a metal mesh, metal foam, metal foil, metal felt, and metal fiber, and in one embodiment, the metal layer may comprise one or more metal or metal alloy selected from the group consisting of titanium, nickel, and stainless steel.

Referring to FIG. 2, the step of coating a metal substrate with silver and iridium may comprise a step of forming a first layer comprising silver on a metal substrate (step S110); and a step of forming a second layer comprising iridium on the first layer (step S120).

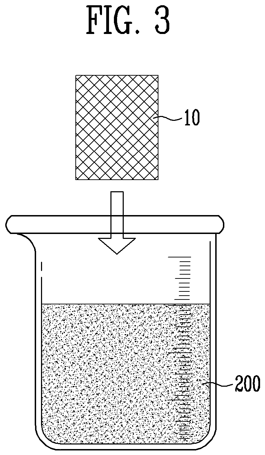

Step S110 may be performed by inputting a metal substrate 10 to a silver precursor solution 200 comprising a silver ion (FIG. 3). In other words, step S120 may be performed through dip coating. Accordingly, a metal substrate may be uniformly coated with silver, which has high ionization energy. In one embodiment, a silver precursor solution may comprise a silver salt. For example, a silver precursor solution may comprise one or more selected from the group consisting of silver nitrate, silver acetate, silver sulfate, silver perchlorate, silver acetylacetonate, and silver methanesulfonate, but is not limited to. In addition, in one embodiment, a silver precursor solution may comprise water, ethanol, or the like as a solvent, but is not limited to a specific example. In terms of deposition efficiency, a mixed solvent of water and ethanol may be used for the silver precursor solution 200.

Step S110 may further comprise heat-treating a substrate coated with a first layer. The heat-treating step of may be performed at a temperature of 100 °C to 900 °C for 10 minutes to 10 hours. Accordingly, the silver in the first layer coated on the metal substrate may have a stable metal phase, and impurities on the metal substrate may be removed.

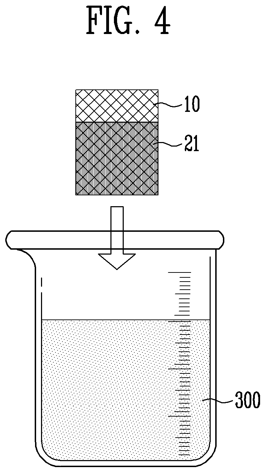

Step S120 may be performed by adding the metal substrate 10 on which the first layer 21 is formed to an iridium precursor solution 300 comprising an iridium ion (FIG. 4). In other words, step S110 may be performed through dip coating. In one embodiment, an iridium precursor solution may comprise an iridium salt. For example, an iridium precursor solution may comprise one or more selected from the group consisting of iridium chloride, an iridium chloride hydrate, iridium bromide, iridium acetylacetonate, hexachloroiridic acid, sodium hexachloroiridate, and potassium hexachloroiridate, but is not limited thereto. In addition, in one embodiment, an iridium precursor solution may comprise water, ethanol, or the like as a solvent, but is not limited to a specific example. In terms of deposition efficiency, a mixed solvent of water and ethanol may be used for the iridium precursor solution 300.

Step S120 may further comprise heat-treating a substrate coated with a second layer. The heat-treating step of may be performed at a temperature of 100 °C to 900 °C for 10 minutes to 10 hours. Accordingly, the iridium in a second layer coated on a first layer may have a stable metal phase.

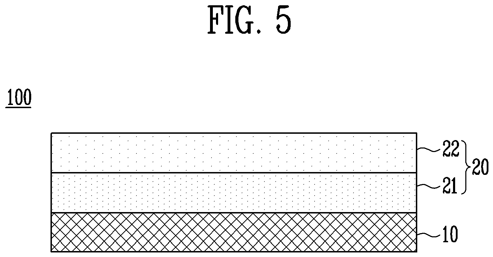

Accordingly, as shown in FIG. 5, a catalyst electrode 100 in which a catalyst layer 20 comprising a first layer 21 and a second layer 22 is formed on a metal layer 10 may be manufactured. By first forming a first layer 21 on a metal layer 10 in this way, oxidation of the metal of the metal substrate during a water electrolysis reaction may be minimized.

### Membrane electrode assembly

In still another aspect of the present disclosure, provided is a membrane electrode assembly comprising an electrolyte membrane; an anode positioned on one surface of the electrolyte membrane; and a cathode positioned on the other surface of the electrolyte membrane, wherein the anode comprises: a metal layer; and a catalyst layer formed on the metal layer and comprising silver and iridium.

The membrane electrode assembly provided in such other aspect of the present disclosure may comprise the above-described catalyst electrode as an anode. In other words, an anode may comprise the metal layer; and the catalyst layer formed on the metal layer and comprising silver and iridium.

In addition, a membrane electrode assembly provided in such other aspect of the present disclosure may comprise a cathode comprising a cathode catalyst, and the cathode catalyst may be a material commonly used in the art. For example, as a cathode catalyst, one single substance or a mixture of two or more substances selected the group consisting of platinum, ruthenium, iridium, osmium, palladium, platinum-ruthenium alloys, platinum-osmium alloys, platinum-palladium alloys, and oxides thereof may be used, but is not limited thereto.

In addition, a membrane electrode assembly provided in another aspect of the present disclosure may comprise an electrolyte membrane disposed between the anode and the cathode. For example, an electrolyte membrane may be a polymer electrolyte membrane comprising a fluorine-based polymer or a hydrocarbon-based polymer, but is not limited thereto.

A membrane electrode assembly provided in another aspect of the present disclosure may be comprised in a water electrolysis device or a fuel cell.

### Examples

Hereinafter, a catalyst electrode, a method for manufacturing catalyst electrode and a membrane electrode assembly according to the present disclosure will be described in more detail based on examples and comparative examples. However, the following examples and comparative examples are only examples to describe the present disclosure in more detail, and the present disclosure is not limited by the following examples and comparative examples.

### <Example 1> - Manufacturing of Ir-Ag/Ti electrode

Silver nitrate (Sigma) was added to a mixed solution of distilled water/ethanol (volume ratio 1:1), and sonicated and stirred until it was completely dissolved to prepare a silver precursor solution with a concentration of 100 mM.

A titanium mesh having been acid-treated with oxalic acid (10 wt%) was dip-coated by adding it to the silver precursor solution prepared in this way and dried at 80 °C on a hot plate, and this process was repeated three times. Afterwards, a silver-coated titanium electrode was manufactured through a process of heat-treating at 300 °C for one hour.

In addition, iridium chloride hydrate (Sigma) was added to a mixed solvent of distilled water/ethanol (volume ratio 1:1), and then sonicated and stirred until it was completely dissolved to prepare an iridium precursor solution with a concentration of 6.7 mM.

The silver-coated titanium electrode was dip-coated by adding it to the iridium precursor solution prepared in this way and dried at 80 °C on a hot plate, and this process was repeated three times. Afterwards, an Ir-Ag/Ti electrode coated with silver and iridium was manufactured through a process of heat-treating at 300 °C for one hour.

### <Comparative Example 1> - Preparation of Ir/Ti electrode

An electrode was manufactured in the same manner as in Example 1, except that the process of adding the titanium mesh to a silver precursor solution was not performed.

### <Comparative Example 2> - Preparation of Ag/Ti electrode

An electrode was manufactured in the same manner as in Example 1, except that the process of adding the titanium mesh to an iridium precursor solution was not performed.

### < Comparative Example 3> - Preparation of IrO₂ electrode

IrO₂ black (100% by weight, manufactured by Alfa Aesar), a commercial anode catalyst, was prepared.

### <Experimental Example 1> - Morphology analysis of electrode of Example 1

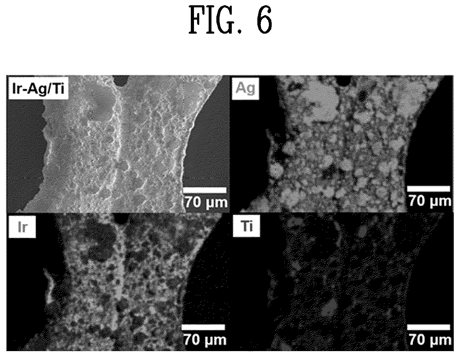

Using a scanning electron microscope (manufactured by Apreo) equipped with an energy-dispersive X-ray spectroscopy- (EDS-) detector, EDS mapping analysis results for the electrode of Example 1 were obtained, and the results are shown in FIG. 6.

Referring to FIG. 6, it can be confirmed that both iridium and silver were present on the titanium mesh of the electrode of Example 1, and both iridium and silver were deposited uniformly throughout the titanium mesh.

### <Experimental Example 2> - Analysis of deposition characteristics of catalyst layer in electrodes

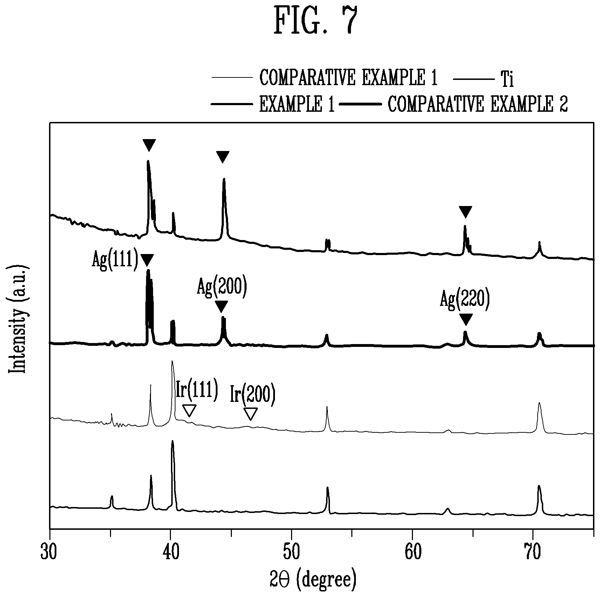

The metal crystal planes of the electrodes of Example 1, Comparative Example 1, and Comparative Example 2 were confirmed using X-ray diffraction (XRD manufactured by PANalytical). At this time, the measurement was performed at 40 kV and 100 mA using Cu Kα radiation in a range of 10° to 80° at a scan speed of 6° per minute at intervals of 0.01°, and the results are shown in FIG. 7.

Referring to FIG. 7, an iridium peak was observed in the XRD analysis results of the electrode of Comparative Example 1, and a silver peak was observed in the XRD analysis results of the electrode of Comparative Example 2. Meanwhile, in the electrode of Example 1, only a peak for silver was confirmed, and a peak for iridium was too small to observe. However, when combining the analytical results in Experimental Example 1 and the XRD analysis results in Experimental Example 2, it can be seen that as iridium is evenly distributed in a very small size, an iridium peak is difficult to confirm in an XRD analysis.

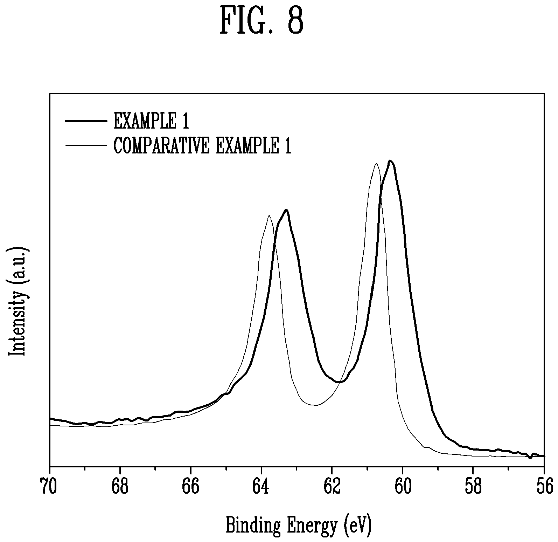

In addition, the electronic structure of the metal present on the electrode surface was confirmed through X-ray photoelectron spectroscopy (XPS) for the electrodes of Example 1 and Comparative Example 1, and the results are shown in FIG. 8.

Referring to FIG. 8, as a result of confirming the main iridium peak of the electrode of Example 1 and the electrode of Comparative Example 1, since the peak of Example 1 shifted to the right compared to the peak of Comparative Example 1, it can be assumed that not only iridium but also silver was present in the catalyst layer of the electrode of Example 1, and it can be seen that the electronic structure of iridium was changed due to the presence of silver.

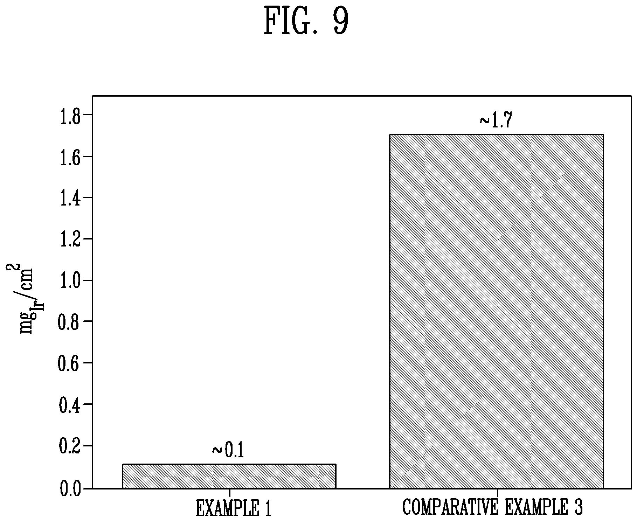

In addition, for the electrodes of Example 1 and Comparative Example 3, the content of iridium (% by weight) present in the catalyst layer of each of the manufactured electrodes was obtained using inductively coupled plasma atomic emission spectroscopy (ICP-AES, NexlON 300X), and the results are shown in FIG. 9.

Referring to FIG. 9, the content of iridium present in the catalyst layer of the electrode of Example 1 was at the level of 0.1 mg/cm², confirming that the loading amount of iridium, an active metal, was significantly less compared to the electrode of Comparative Example 3, which has an iridium content of 1.7 mg/cm². Despite the significantly low iridium loading amount, the electrode of Example 1 may have superior activity compared to the electrode of Comparative Example 3, as will be described later.

### <Experimental Example 3> - Evaluation of electrochemical properties of electrodes

The electrodes of Example 1, Comparative Example 1, Comparative Example 2, and Comparative Example 3 were used as a working electrode, Ag/AgCI (sat. 3 M KCI) was used as a reference electrode, and a graphite rod was used as a counter electrode to measure the polarization of the OER for the electrodes of Example 1, Comparative Example 1, Comparative Example 2, and Comparative Example 3. Each electrode was put into a 0.5 M H₂SO₄ acid solution, and OER was performed at a scan rate of 10 mV/s and room temperature.

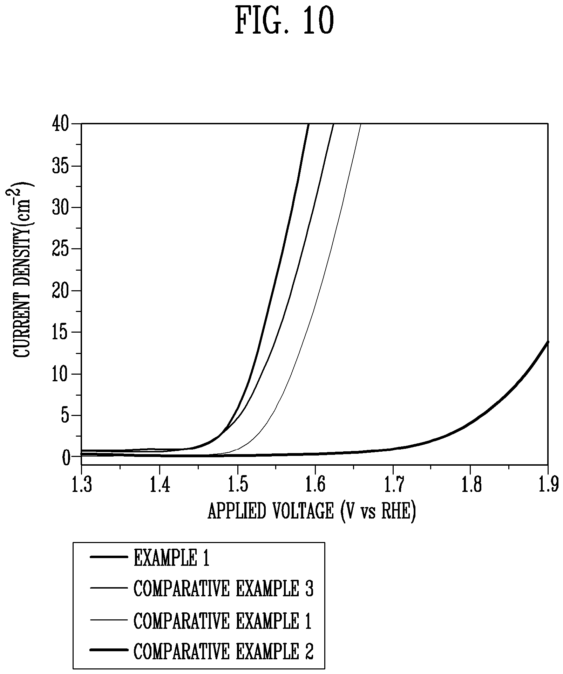

The polarization results for the OER are shown in FIG. 10 and Table 1 below, in which all the measurements were expressed as "vs reversible hydrogen electrode (RHE)."

**[Table 1]**

| | Overpotential (mV vs RHE; reference of current density: 10 mAcm⁻²) |
|---|---|
| Example 1 | 287 |
| Comparative Example 1 | 340 |
| Comparative Example 2 | 641 |
| Comparative Example 3 | 302 |

Referring to FIG. 10 and Table 1, it can be seen that with regard to the OER performance based on a current density of 10 mAcm⁻², the activity was good in the following order: Example 1, Comparative Example 3, Comparative Example 1, and Comparative Example 2.

In Example 1, an overpotential of only 287 mV was required to obtain a current density value of 10 mAcm⁻², which is a value 15 mV smaller than that of Comparative Example 3 and 53 mV smaller than that of Comparative Example 1.

As confirmed through the ICP analysis results of Example 1, it can be seen that although Example 1 had a significantly lower catalyst metal loading amount than that of Comparative Example 3, the OER performance of Example 1 was superior to Comparative Example 3.

In other words, it can be assumed that in the electrode of Example 1, as both iridium and silver were deposited on a titanium mesh and interact with each other, the electronic structure of iridium, which was the active metal, was changed, and so the OER performance was significantly improved.

## Claims

1. A catalyst electrode (100) comprising:
a metal layer (10); and
a catalyst layer (20) formed on the metal layer (10),
wherein the catalyst layer (20) comprises silver and iridium.

2. The catalyst electrode (100) according to claim 1, wherein at least a part of the silver and iridium comprised in the catalyst layer (20) is chemically bonded with each other.

3. The catalyst electrode (100) according to claim 1 or 2, wherein iridium is contained in the catalyst layer at a loading amount ranging from 0.02 to 0.8 mg/cm².

4. The catalyst electrode (100) according to anyone of claims 1 to 3, wherein the metal layer (10) comprises one or more selected from the group consisting of a metal mesh, a metal foam, a metal foil, a metal felt, and a metal fiber, optionally wherein the metal of the metal layer (10) is one or more metal or metal alloy selected from the group consisting of titanium, nickel, and stainless steel.

5. The catalyst electrode (100) according to one of claims 1 to 4, wherein the catalyst layer (20) comprises:
a first layer (21) comprising the silver and in contact with the metal layer (10); and
a second layer (22) comprising the iridium and formed on the first layer (21).

6. The catalyst electrode (100) according to claim 5, wherein at least a part of the silver comprised in the first layer (21) is chemically bonded with a metal of the metal layer (10).

7. The catalyst electrode (100) according to one of claims 1 to 6, wherein the catalyst layer (20) does not comprise a binder.

8. A method for manufacturing a catalyst electrode (100), comprising a step of coating a metal substrate (10) with silver and iridium.

9. The method for manufacturing a catalyst electrode (100) according to claim 8, wherein the step of coating a metal substrate (10) with silver and iridium comprises:
a step of forming a first layer (21) comprising silver on the metal substrate (10) by inputting the metal substrate (10) to a silver precursor solution (200) comprising a silver ion; and
a step of forming a second layer (22) comprising iridium on the first layer (21) by inputting the metal substrate (10) on which the first layer (21) is formed to an iridium precursor solution (300) comprising an iridium ion.

10. The method for manufacturing a catalyst electrode (100) according to claim 9, wherein the step of forming a first layer (21) comprises a step of heat-treating the substrate coated with the first layer (21).

11. The method for manufacturing a catalyst electrode according to claim 9, wherein the step of forming a second layer (22) comprises a step of heat-treating the substrate coated with the second layer (22).

12. The method for manufacturing a catalyst electrode (100) according to one of claims 8 to 11, further comprising a step of acid-treating the metal substrate (10) before the step of coating a metal substrate (10) with silver and iridium.

13. The method according to one of claims 8 to 12, wherein the silver precursor solution contains a silver precursor of one or more selected from the group consisting of silver nitrate, silver acetate, silver sulfate, silver perchlorate, silver acetylacetonate, and silver methanesulfonate, preferably silver nitrate; and/or wherein the iridium precursor solution contains an iridium precursor of one or more selected from the group consisting of iridium chloride, an iridium chloride hydrate, iridium bromide, iridium acetylacetonate, hexachloroiridic acid, sodium hexachloroiridate, and potassium hexachloroiridate, preferably iridium chloride hydrate.

14. A membrane electrode assembly, comprising:
an electrolyte membrane;
an anode positioned on one surface of the electrolyte membrane; and
a cathode positioned on the other surface of the electrolyte membrane,
wherein the anode comprises:
a metal layer (10); and
a catalyst layer (20) formed on the metal layer (10) and comprising silver and iridium.

15. Use of the catalyst electrode (100) according to any one of claims 1 to 7 for being comprised in a water electrolysis device or in a fuel cell.
